(19) Europäisches Patentamt / European Patent Office / Office européen des brevets

(11) EP 2 458 664 B1

(12) EUROPEAN PATENT SPECIFICATION

(45) Date of publication and mention of the grant of the patent:
**26.04.2017 Bulletin 2017/17**

(21) Application number: **11185662.1**

(22) Date of filing: **18.10.2011**

(51) Int Cl.:
***H01M 4/13*** *(2010.01)*
***H01M 4/525*** *(2010.01)*
***H01M 10/0525*** *(2010.01)*
*H01M 10/42 (2006.01)*
***H01M 4/36*** *(2006.01)*
***H01M 4/58*** *(2010.01)*
*H01M 4/02 (2006.01)*

# (54) Rechargeable lithium battery

Wiederaufladbare Lithiumbatterie

Batterie au lithium rechargeable

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.11.2010 KR 20100118330**

(43) Date of publication of application:
**30.05.2012 Bulletin 2012/22**

(73) Proprietor: **Samsung SDI Co., Ltd.**
**Yongin-si, Gyeonggi-do (KR)**

(72) Inventors:
- **Kim, Jae-Hyuk**
  **Yongin-si**
  **Gyeonggi-do (KR)**
- **Moon, Sung-Hwan**
  **Yongin-si**
  **Gyeonggi-do (KR)**
- **Yuri, Matulevich**
  **Yongin-si**
  **Gy (KR)**
- **Jeong, Myung-Hwan**
  **Yongin-si**
  **Gyeonggi-do (KR)**
- **Chu, Hee-Young**
  **Yongin-si**
  **Gyeonggi-do (KR)**
- **Jeong, Chang-Ui**
  **Yongin-si**
  **Gyeonggi-do (KR)**
- **Song, Joo-Han**
  **Yongin-si**
  **Gyeonggi-do (KR)**
- **Choi, Jong-Seo**
  **Yongin-si**
  **Gyeonggi-do (KR)**

(74) Representative: **Santarelli**
**49, avenue des Champs-Elysées**
**75008 Paris (FR)**

(56) References cited:
**JP-A- 2006 073 369**
**KR-A- 20040 073 076**
**US-A1- 2005 042 514**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 458 664 B1

## Description

BACKGROUND

Field

The disclosure relates to a positive active material for a rechargeable lithium battery and a rechargeable lithium battery including the same.

Description of the Related Technology

Much research has been undertaken on increasing energy density to accomplish a rechargeable lithium battery with high-capacity.

A great deal of attention has been made in an attempt to increase energy density of a battery by using Si-based oxide or Sn-based oxide, their alloy, and the like, which are known to have high capacity, as a negative active material. However, these negative active materials have a problem of severe initial irreversible capacity. It is necessary to use a positive active material having capacity in order to compensate the severe initial irreversible capacity of the negative active material.

Conventionally, a $Li_2MoO_3$ material may be mixed with a positive active material to compensate initial irreversible capacity but it has an unstable structure. Even though other elements are added to the $Li_2MoO_3$ material in order to improve stability of the $Li_2MoO_3$ material, this is not sufficient to achieve stability of the $Li_2MoO_3$ material. Accordingly, there are shortcomings, such as dissolution of Mo from the $Li_2MoO_3$ material during the repeated charge and discharge cycles. In addition, graphite, a conventional negative electrode material, has initial irreversible capacity ranging from 20 to 60% of the entire amount of Li which can be inserted into the graphite (J. Eloctrochem. Soc., Vol. 145, No. 4, April 1998) and thus, requires an extra Li source.

KR 2004 0073076 discloses a rechargeable lithium battery as defined in the preamble of claim 1.

US 2005/042514 and JP 2006 07336 also disclose rechargeable batteries comprising active materials containing $Li_2S$.

SUMMARY

An embodiment provides a rechargeable lithium battery having no aforementioned problem and realizing high-capacity.

This embodiment provides a rechargeable lithium battery as defined in claim 1.

A particle of the lithium polysulfide may have a diameter (X) determined by the following Equation 1.

[Equation 1]

$$2r(\sqrt{2}-1) \leq X \leq 2r(\sqrt{2}-1)+2r(\sqrt{2}-1)\times K$$

In the above Equation 1,
r is the radius of an active material capable of reversibly intercalating/deintercalating lithium, and K is a volume reduction ratio when lithium polysulfide is converted into sulfur.

The embodiment may provide a rechargeable lithium battery being compensated for initial irreversible capacity and having excellent charge and discharge capacity and cycle characteristic.

BRIEF DESCRIPTION OF THE DRAWINGS

FIG. 1 provides a drawing schematically showing the structure of a rechargeable lithium battery according to one embodiment.

FIG. 2 provides a graph showing charge/discharge capacity change depending on the added amount of lithium sulfide.

DETAILED DESCRIPTION

Example embodiments will hereinafter be described in detail. However, these embodiments are only examples,

and the present invention is not limited thereto. Their features may, if appropriate, be combined.

According to one embodiment, a positive active material for a rechargeable lithium battery is provided, which includes an active material capable of reversibly intercalating/deintercalating lithium and lithium sulfide.

The lithium sulfide is used for an irreversible material generated from the irreversible reaction of lithium during the initial charge and discharge and compensate capacity deterioration due to generation of the irreversible material.

The lithium sulfide may be added to a positive active material with high-capacity. The $Li_2S$ has 1141.6mAh/g of theoretical capacity, which is four times greater than the 273mAh/g of theoretical capacity of lithium cobalt-based oxide and seven times greater than the 150mAh/g of actual capacity of the lithium cobalt-based oxide.

In addition, the lithium sulfide has large capacity per volume as a positive active material. For example, it has twice the capacity of lithium cobalt-based oxide. Accordingly, the lithium sulfide may be included in a smaller volume to accomplish desired battery capacity. The same volume of the lithium sulfide may bring about bigger capacity improvement. The lithium sulfide may be controlled regarding the amount added to acquire the desired capacity.

The lithium polysulfide has a standard reduction potential of about 2.1V against $Li/Li^+$, which is a relatively low value, and is lower than a positive active material with reduction potential of more than or equal to 3V such as lithium cobalt-based oxide, lithium manganese-based oxide, and the like and thus, it has a lower oxidation and reduction potential than the other positive active materials, after fabricating a battery. Thus, lithium may be initially deintercalted from lithium polysulfide. Accordingly, the lithium sulfide may work as a Li ion source for solving an initial irreversible capacity problem.

The active material capable of reversibly intercalating/deintercalating lithium is $LiCoO_2$ The active material can have a coating layer on the surface or can be mixed with a compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxy carbonate of a coating element. The compounds for a coating layer may be amorphous or crystalline. The coating element for a coating layer may include Mg, Al, Co, K, Na, Ca, Si, Ti, V, Sn, Ge, Ga, B, As, Zr, or a mixture thereof. The coating layer can be formed with any method having no negative influence on properties of a positive active material by adding these elements to the compound. For example, the method may include any coating method such as spray coating, dipping, or the like, but is not illustrated in more detail since it is well-known to a skilled person in the related field.

In one embodiment, a positive electrode includes a current collector and a positive active material layer on the current collector. The positive active material includes the positive active material defined above, and may include a binder and a conductive material.

The binder improves binding properties of the positive active material particles to each other and to a current collector. Examples of the binder include at least one of polyvinylalcohol, carboxylmethylcellulose, hydroxypropylcellulose, diacetylcellulose, polyvinylchloride, a carboxylated polyvinylchloride, polyvinylfluoride, a polymer including poly(ethylene oxide), polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin or nylon, and the like, but are not limited thereto.

Any electrically conductive material may be used as a conductive material unless it causes a chemical change. Examples of the conductive material include: carbon-based materials such as natural graphite, artificial graphite, carbon black, acetylene black, ketjen black, a carbon fiber, or the like; a metal-based material such as a metal powder or a metal fiber including copper, nickel, aluminum, silver, or the like; a conductive polymer such as a polyphenylene derivative; and mixtures thereof.

The lithium sulfide may be controlled regarding particle sizes to increase volume energy density of the positive active material. According to one embodiment, lithium sulfide particle may have a diameter (X) satisfying the following Equation 1, wherein r is the radius of the active material capable of reversibly intercalating/deintercalating lithium, and K is a volume reduction ratio when lithium sulfide is converted into sulfur.

[Equation 1]

$$2r(\sqrt{2}-1) \leqq X \leqq 2r\,(\sqrt{2}-1) + 2r(\sqrt{2}-1) \times K$$

For example, since $Li_2S$ has a volume reduction ratio of 54.8%, K=0.548.

According to the embodiment, when the $Li_2S$ is controlled regarding particle size and compressed to have high packing density, a positive active material may have improved capacity with the same volume.

Lithium sulfide having a low weight average molecular weight is desired, since it may compensate big irreversible capacity in a small amount, increasing capacity of a positive active material.

Another embodiment provides a rechargeable lithium battery including the positive active material as defined above for a rechargeable lithium battery.

The rechargeable lithium battery includes a negative electrode including a negative active material; a positive electrode including the aforementioned positive active material; and a non-aqueous electrolyte.

Rechargeable lithium batteries may be classified into lithium ion batteries, lithium ion polymer batteries, and lithium polymer batteries according to the presence of a separator and the kind of electrolyte used in the battery. The rechargeable lithium batteries may have a variety of shapes and sizes, and include cylindrical, prismatic, or coin-type batteries, and may be thin film batteries or may be rather bulky in size. The structure and the fabrication method for lithium ion batteries are well known in the art and will not be illustrated.

FIG. 1 is an exploded perspective view of a rechargeable lithium battery according to one embodiment. FIG. 1 illustrates a cylindrical rechargeable lithium battery 100, which includes a negative electrode 112, a positive electrode 114, a separator 113 interposed between the negative electrode 112 and the positive electrode 114, an electrolyte (not shown) impregnating the separator 113, a battery case 120, and a sealing member 140 sealing the battery case 120. The negative electrode 112, positive electrode 114, and separator 113 are sequentially stacked, spirally wound, and placed in the battery case 120 to fabricate such a rechargeable lithium battery 100.

The negative electrode includes, here, a current collector and a negative active material layer disposed on the current collector. The negative active material layer includes a negative active material.

The negative active material may include a material that reversibly intercalates/deintercalates lithium ions, a lithium metal, a lithium metal alloy" a material capable of doping and dedoping lithium, or a transition metal oxide.

The material that reversibly intercalates/deintercalates lithium ions includes a carbon material. The carbon material may be any generally-used carbon-based negative active material for a lithium ion rechargeable battery. Examples of the carbon material include crystalline carbon, amorphous carbon, or a mixture thereof. The crystalline carbon may be non-shaped, or sheet, flake, spherical, or fiber shaped natural graphite or artificial graphite. The amorphous carbon may be a soft carbon, a hard carbon, mesophase pitch carbonized products, fired coke, or the like.

Examples of the lithium metal alloy includes lithium and a metal selected from Na, K, Rb, Cs, Fr, Be, Mg, Ca, Sr, Si, Sb, Pb, In, Zn, Ba, Ra, Ge, Al, or Sn.

Examples of the material capable of doping and dedoping lithium include Si, $SiO_x$ ($0 < x < 2$), a Si-M alloy (where M is an element selected from the group consisting of an alkaline metal, an alkaline-earth metal, a group 13 element, a group 14 element, a group 15 element, a group 16 element, a transition element, a rare earth element, and combinations thereof, and is not Si), Sn, $SnO_2$, a Sn-M alloy (where M is an element selected from the group consisting of an alkaline metal, an alkaline-earth metal, a group 13 element, a group 14 element, a group 15 element, a group 16 element, a transition element, a rare earth element, and combinations thereof, and is not Sn), and mixtures thereof. At least one of these materials may be mixed with $SiO_2$. The element M is Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

Examples of the transition metal oxide include vanadium oxide, lithium vanadium oxide, or the like.

Thanks to the provisions mentioned above,the rechargeable lithium battery has no shortcomings related to the initial irreversible capacity of the negative active material and accomplishes high capacity.

[For example, when a graphite negative active material is used, a battery may have an irreversible reaction represented by Reaction Scheme 1 during the initial charge.

[Reaction Scheme 1] $Li^+ + e^- + \text{Electrolyte} \rightarrow (\text{Li-Electrolyte})$

Herein, the produced [Li-Electrolyte] may form a solid electrolyte interface (SEI) film on the surface of a negative active material surface and work as an irreversible material, not using Li therein during the charge and discharge.

According to another embodiment, when a SiO negative active material is used, a battery may have an irreversible reaction represented by the following Reaction Scheme 2 during the initial charge cycle.

[Reaction Scheme 2] $5SiO + 6Li \rightarrow Li_2O + Li_4SiO_4 + 4Si$

According to still another embodiment, when a negative active material such as Si, $SiO_x$ and the like is used, nano cluster lithium oxide or lithium silicate surrounding Si after the initial charge and discharge may work as an irreversible material using no Li. The amount of the irreversible material may reach about 45% of maximum capacity (Journal of Power Sources 195, 2010, 6143-6147).

A positive active material including extra Li corresponding to the amount of irreversibly consumed Li in the initial reaction can be provided, but this in general deteriorates energy density of the positive active material. According to the present invention, a positive active material is mixed with a material that compensates initial irreversibility and also has high energy density and minimized mass and volume after lithium deintercalation to minimize energy density loss during the charge and discharge later. Herein, the lithium sulfide is usefully applied therein. When Li used in the initial irreversible reaction comes from a positive active material, the lithium sulfide may compensate the Li.

For example, when Si, Sn, and the like is used as a negative active material, its irreversible capacity loss during the initial cycle (formation) is known to reach about 50% of the initial capacity (refer to Electrochemical and Solid-State Letters, 6 90 A194-A197, 2003). Accordingly, Li may be consumed about 40 to 50% of maximum capacity in the initial irreversible reaction and about 50 to 60% of the capacity from the second cycle. Herein, when lithium sulfide with big capacity per g is included in a positive active material, it may compensate the initial irreversible capacity. In addition, when lithium sulfide is used in the formation process, its low rate characteristic itself may be used.

According to an embodiment of the present invention, a rechargeable lithium battery maintains excellent capacity and cycle characteristic by using lithium sulfide as a positive additive to compensate initial irreversible capacity and has increased battery capacity by using a high-capacity negative active material. The high-capacity negative active material may be selected from the group consisting of, for example, graphite, silicon (Si), silicon-based oxide, silicon-based carbide, tin, tin-based oxide, and a combination thereof.

In the rechargeable lithium battery as claimed, the negative active material is natural graphite.

In a rechargeable lithium battery according to another embodiment, the negative active material layer may include a binder and optionally a conductive material.

The binder improves binding properties of the negative active material particles to each other and to a current collector. Examples of the binder include at least one polyvinylalcohol, carboxylmethylcellulose, hydroxypropylcellulose, polyvinylchloride, carboxylated polyvinylchloride, polyvinylfluoride, a polymer including poly(ethylene oxide), polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin or nylon, and the like, but are not limited thereto.

The conductive material is included to improve electrode conductivity. Any electrically conductive material may be used as a conductive material unless it causes a chemical change. Examples of the conductive material include a carbon-based material such as natural graphite, artificial graphite, carbon black, acetylene black, ketjen black, or a carbon fiber; a metal-based material such as a metal powder or a metal fiber including copper, nickel, aluminum, or silver; a conductive polymer such as a polyphenylene derivative; and mixtures thereof.

The current collector may include a copper foil, a nickel foil, a stainless steel foil, a titanium foil, a nickel foam, a copper foam, a polymer substrate coated with a conductive metal, or combinations thereof.

The positive electrode includes, here, a current collector and a positive active material layer disposed on the current collector.

The current collector includes Al, but is not limited thereto.

The positive active material includes an active material capable of reversibly intercalating/deintercalating lithium and lithium polysulfide and is illustrated in detail as aforementioned.

After the lithium sulfide compensates initial irreversible capacity, sulfur (S) is produced therefrom during the charge and discharge. The sulfur (S) reacts with Li at a low potential later and rather deteriorates energy density. In addition, sulfur ions may be dissolved in an electrolyte and work as impurities. Accordingly, the lithium sulfide may be controlled regarding amount in terms of energy density. According to another embodiment, the amount of the positive active material included in the rechargeable lithium battery may therefore be determined according to the following Equation 2.

[Equation 2]

$$Y : Z = D / E : [(A \times B) / \{ (100 - B) \times C\}] \pm 20\%$$

In the above Equation 2,

Y indicates the amount of an active material capable of reversibly intercalating/deintercalating lithium, and Z indicates the amount of lithium polysulfide,
A indicates a capacity of negative active material (mAh) required in a battery, and the capacity of the negative active material refers to (N/P ratio) X battery capacity. For example, in a battery with a capacity of 1.5mAh, if N/P ratio is 1.1, the capacity of negative active material is 1.65mAh. The N/P ratio refers to a required amount of a negative active material to a positive electrode capacity.
B indicates a negative active material irreversible capacity ratio [%],
D indicates design capacity (mAh),
E indicates the theoretical capacity (mAh/g) of the active material capable of reversibly intercalating/deintercalating lithium, and
C indicates theoretical specific capacity (mAh/g) of lithium polysulfide. For example, since $Li_2S$ has theoretical capacity of 1141.6 mAh/g, C=1141.6.

The amount of an active material capable of reversibly intercalating/deintercalating lithium is determined by D/E based on the entire battery capacity, and then, the amount of lithium polysulfide may be determined according to Equation 2.

For example, when lithium cobalt-based oxide is used as a positive active material, and $Li_2S$ as an additive, the positive active material includes an active material capable of reversibly intercalating/deintercalating lithium and $Li_2S$ in a ratio ranging from 94:6 to 91:9 solves an initial irreversible capacity problem. Accordingly, it may ultimately solve irreversible capacity problem of a high-capacity negative electrode.

The negative and positive electrodes may be fabricated by a method including mixing the active material, a binder, and optionally, a conductive material to provide an active material composition, and coating the composition on a current collector followed by drying and compressing it. The electrode-manufacturing method is well known and thus is not described in detail in the present description. The solvent includes N-methylpyrrolidone or the like, but is not limited thereto.

In a rechargeable lithium battery according to an embodiment, the electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent. Examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent may include methyl acetate, ethyl acetate, n-propyl acetate, dimethyl acetate, methylpropionate, ethylpropionate, $\gamma$-butyrolactone, decanolide, valerolactone, mevalonolactone, caprolactone, and the like. Examples of the ether-based solvent include dibutyl ether, tetraglyme, diglyme, dimethoxyethane, 2-methyltetrahydrofuran, tetrahydrofuran, and the like, and examples of the ketone-based solvent include cyclohexanone and the like. Examples of the alcohol-based solvent include ethyl alcohol, isopropyl alcohol, and the like, and examples of the aprotic solvent include nitriles such as R-CN (where R is a $C_2$ to $C_{20}$ linear, branched, or cyclic hydrocarbon, or including a double bond, an aromatic ring, or an ether bond), amides such as dimethylformamide, dioxolanes such as 1,3-dioxolane, sulfolanes, and the like.

The non-aqueous organic solvent may be used singularly or in a mixture. When the organic solvent is used in a mixture, the mixture ratio can be controlled in accordance with a desirable battery performance.

The carbonate-based solvent may include a mixture of a cyclic carbonate and a linear carbonate. The cyclic carbonate and the linear carbonate are mixed together in a volume ratio of about 1:1 to about 1:9. When the mixture is used as an electrolyte, the electrolyte performance is enhanced.

In addition, the non-aqueous organic electrolyte may further include the mixture of a carbonate-based solvent and an aromatic hydrocarbon-based solvent. The carbonate-based solvent and the aromatic hydrocarbon-based solvent may be mixed together in a volume ratio from about 1:1 to about 30:1.

The aromatic hydrocarbon-based organic solvent may be represented by the following Chemical Formula 1.

[Chemical Formula 1]

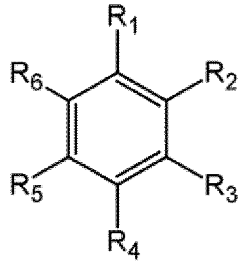

In Chemical Formula 1, $R_1$ to $R_6$ are independently selected from the group consisting of hydrogen, a halogen, a C1 to C10 alkyl group, a C1 to C10 haloalkyl group, and a combination thereof.

The aromatic hydrocarbon-based organic solvent may include, but is not limited to, at least one selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, or a combination thereof.

The non-aqueous electrolyte may further include vinylene carbonate, an ethylene carbonate-based compound of the following Chemical Formula 2, or a combination thereof in order to improve cycle life of a battery.

[Chemical Formula 2]

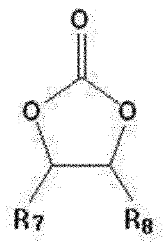

In Chemical Formula 2, $R_7$ and $R_8$ are independently hydrogen, a halogen, a cyano group (CN), a nitro group ($NO_2$), or a C1 to C5 fluoroalkyl group, provided that at least one of $R_7$ and $R_8$ is a halogen, a cyano group (CN), a nitro group ($NO_2$), or a C1 to C5 fluoroalkyl group.

Examples of the ethylene carbonate-based compound include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The use amount of the vinylene carbonate or the ethylene carbonate-based compound may be adjusted within an appropriate range.

The lithium salt is dissolved in an organic solvent, supplies lithium ions in the battery, operates basic operation of a rechargeable lithium battery, and improves lithium ion transport between positive and negative electrodes. Examples of the lithium salt include at least one supporting salt selected from $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $LiC_4F_9SO_3$, $LiClO_4$, $LiAlO_2$, $LiAlCl_4$, $LiN(C_xF_{2x+1}SO_2)(C_yF_{2y+1}SO_2)$ (where x and y are natural numbers), LiCl, LiI, and $LiB(C_2O_4)_2$ (lithium bisoxalato borate, LiBOB). The lithium salt may be used in a concentration ranging from about 0.1 M to about 2.0 M. When the lithium salt is included at the above concentration range, electrolyte performance and lithium ion mobility may be enhanced due to optimal electrolyte conductivity and viscosity.

The rechargeable lithium battery may further include a separator between the negative electrode and the positive electrode, as needed. Examples of suitable separator materials include polyethylene, polypropylene, polyvinylidene fluoride, and multi-layers thereof, such as a polyethylene/polypropylene double-layered separator, a polyethylene/polypropylene/polyethylene triple-layered separator, and a polypropylene/polyethylene/polypropylene triple-layered separator.

The following examples illustrate this disclosure in more detail. These examples, however, are not in any sense to be interpreted as limiting the scope of this disclosure.

## Example

(Example 1) - Comparative Example

A $LiCoO_2$ positive active material (theoretical specific capacity: 150mAh/g, diameter: 20 $\mu$m), a denka black conductive agent and a polyvinylidene fluoride binder were mixed in an N-methyl pyrrolidone solvent at a weight ratio of 92 : 4 : 4, to prepare a positive active material slurry. $Li_2S$ (theoretical capacity: 1141.6mAh/g, diameter: 1.66 $\mu$m, weight average molecular weight: 45.95) was added to the positive active material slurry. The amount of the $Li_2S$ was 0.2 parts by weight based on 100 parts by weight of the positive active material.

The resulting positive active material slurry with $Li_2S$ added was coated on an Al-foil current collector using a table coater, dried and then pressed, to produce a positive electrode.

A natural graphite negative active material and a polyvinylidene fluoride binder were mixed in an N-methyl pyrrolidone solvent at a weight ratio of 97.5 : 2.5, to prepare a negative active material slurry. The negative active material slurry was coated on a Cu-foil current collector using a table coater, dried, and then pressed, to produce a negative electrode.

A coin cell with a design capacity of 1.5mAh, was fabricated using the positive electrode, the negative electrode, an electrolyte and a separator. As the electrolyte, a 1M LiPF6 dissolved in a mixed organic solvent of ethylene carbonate, ethyl methyl carbonate and dimethyl carbonate (3 : 3 : 4 volume ratio) was used. As the separator, a polyethylene separator was used.

In the coin cell, a N/P ratio was set to 1.1.

(Example 2) - Comparative Example

A coin cell was fabricated by the same procedure as in Example 1, except that the amount of $Li_2S$ added to the positive active material slurry was changed to 0.4 parts by weight based on 100 parts by weight of the positive active material.

(Example 3)

A coin cell was fabricated by the same procedure as in Example 1, except that the amount of $Li_2S$ added to the positive active material slurry was changed to 0.6 parts by weight based on 100 parts by weight of the positive active material.

(Example 4)

A coin cell was fabricated by the same procedure as in Example 1, except that the amount of $Li_2S$ added to the positive active material slurry was changed to 0.8 parts by weight based on 100 parts by weight of the positive active material.

(Example 5) - Comparative Example

A coin cell was fabricated by the same procedure as in Example 1, except that the amount of $Li_2S$ added to the positive active material slurry was changed to 1.0 parts by weight based on 100 parts by weight of the positive active material.

(Example 6) - Comparative Example

A coin cell was fabricated by the same procedure as in Example 1, except that the amount of $Li_2S$ added to the positive active material slurry was changed to 1.2 parts by weight based on 100 parts by weight of the positive active material.

(Example 7) - Comparative Example

A coin cell was fabricated by the same procedure as in Example 1, except that the amount of $Li_2S$ added to the positive active material slurry was changed to 1.4 parts by weight based on 100 parts by weight of the positive active material.

(Example 8) - Comparative Example

A coin cell was fabricated by the same procedure as in Example 1, except that the amount of $Li_2S$ added to the positive active material slurry was changed to 1.6 parts by weight based on 100 parts by weight of the positive active material.

(Example 9) - Comparative Example

A coin cell was fabricated by the same procedure as in Example 1, except that the amount of $Li_2S$ added to the positive active material slurry was changed to 1.8 parts by weight based on 100 parts by weight of the positive active material.

(Example 10) - Comparative Example

A coin cell was fabricated by the same procedure as in Example 1, except that the amount of $Li_2S$ added to the positive active material slurry was changed to 2.0 parts by weight based on 100 parts by weight of the positive active material.

(Comparative Example 11)

A coin cell was fabricated by the same procedure as in Example 1, except that $Li_2S$ was not added to the positive active material.

The coin cells according to Examples 3 and 4 and Comparative Examples 1, 2 and 5 to 11 was charged and discharged under an initial formation condition. The initial formation condition was a charge at 0.1C to 4.3V using a CC/CV (constant current/ constant voltage) mode, and then a discharge at 0.1C to3.0V using a CC mode for once.

The charge and discharge capacities according to the initial formation were measured and the results are shown in FIG. 2.

As shown in FIG. 2, the cells according to Examples 3 and 4 and Comparative Examples 1, 2 and 5 to 10 with an addition of polysulfide exhibited improved charge capacities and discharge capacities, compared to the cells according to Comparative Example 11 without polysulfide. Furthermore, the cells according to Examples 3 and 4 and Comparative Examples 2 and 5 to 10 have increased charge capacity and desired discharge capacity (design capacity) despite a decreasing amount of lithium cobalt oxide.

More especially, the cells according to Examples 3 and 4, which include lithium sulfide within the range of Equation 2, have increasing charge capacity but no increasing discharge capacity due to sulfur loss into an electrolyte or irreversible reaction after the charge. In addition, when the lithium sulfide is restricted to have a diameter range of Equation 1, it may not be included in more volume to compensate initial irreversible reaction. Indeed, the same given volume of the lithium sulfide may solve irreversible capacity.

While this disclosure has been described in connection with what is presently considered to be practical example embodiments, it is to be understood that the embodiments are not limited to the disclosed embodiments, but, on the contrary, is intended to cover various modifications and equivalent arrangements included within the scope of the appended claims.

**Claims**

1. A rechargeable lithium battery comprising:

   a negative electrode comprising a negative active material;
   a positive electrode comprising a positive active material comprising $LiCoO_2$ as an active material capable of reversibly intercalating/deintercalating lithium and $Li_2S$; and
   a non aqueous electrolyte ;
   **characterized in that** the negative active material is natural graphite, the amount of $Li_2S$ is 0,6 to 0,8 parts by weight based on 100 parts by weight of the positive active material and the N/P ratio is 1.1.

2. The rechargeable lithium battery of claim 1, wherein the lithium sulfide particle has a diameter (X) satisfying the following Equation 1:

   [Equation 1]

$$2r(\sqrt{2}-1) \leqq X \leqq 2r(\sqrt{2}-1) + 2r(\sqrt{2}-1) \times K$$

   wherein, in the above Equation 1,
   r is the radius of the active material capable of reversibly intercalating/deintercalating lithium, and K is the volume reduction ratio when lithium sulfide becomes sulfur.

3. The rechargeable lithium battery of anyone of claims 1 to 2, wherein the non-aqueous electrolyte comprises a non-aqueous organic solvent and a lithium salt.

4. The rechargeable lithium battery of claim 3, wherein the non-aqueous organic solvent is at least one selected from the group consisting of a carbonate-based solvent, ester-based solvent, ether-based solvent, ketone-based solvent, alcohol-based solvent, and aprotic solvent.

**Patentansprüche**

1. Wiederaufladbare Lithiumbatterie, umfassend:

   eine negative Elektrode, umfassend ein negatives Aktivmaterial;
   eine positive Elektrode, umfassend ein positives Aktivmaterial mit $LiCoO_2$ als Aktivmaterial, das imstande ist,

Lithium und $Li_2S$ reversibel zu interkalieren/deinterkalieren; und
einen nichtwässrigen Elektrolyten;
**dadurch gekennzeichnet, dass** das negative Aktivmaterial natürlicher Graphit ist, die Menge von $Li_2S$ 0,6 bis 0,8 Gewichtsteile, bezogen auf 100 Gewichtsteile des positiven Aktivmaterials, beträgt und das Verhältnis N/P 1,1 beträgt.

2. Wiederaufladbare Lithiumbatterie nach Anspruch 1, wobei das Lithiumsulfidpartikel einen Durchmesser (X) aufweist, der der folgenden Gleichung 1 genügt:

[Gleichung 1]

$$2r(\sqrt{2}-1) \leqq X \leqq 2r(\sqrt{2}-1) + 2r(\sqrt{2}-1) \times K$$

wobei, in der vorstehenden Gleichung 1,
r der Radius des Aktivmaterials, das imstande ist, Lithium reversibel zu interkalieren/deinterkalieren, ist und K das Volumenverringerungsverhältnis, wenn aus Lithiumsulfid Schwefel wird, ist.

3. Wiederaufladbare Lithiumbatterie nach einem der Ansprüche 1 bis 2, wobei der nichtwässrige Elektrolyt ein nichtwässriges organisches Lösungsmittel und ein Lithiumsalz umfasst.

4. Wiederaufladbare Lithiumbatterie nach Anspruch 3, wobei das nichtwässrige organische Lösungsmittel mindestens eines, ausgewählt aus der Gruppe bestehend aus einem Lösungsmittel auf Carbonatbasis, einem Lösungsmittel auf Esterbasis, einem Lösungsmittel auf Etherbasis, einem Lösungsmittel auf Ketonbasis, einem Lösungsmittel auf Alkoholbasis und einem aprotischen Lösungsmittel, ist.

## Revendications

1. Batterie au lithium rechargeable comprenant :

une électrode négative comprenant un matériau actif négatif ;
une électrode positive comprenant un matériau actif positif comprenant du $LiCoO_2$ en tant que matériau actif capable d'intercaler/désintercaler de manière réversible le lithium et $Li_2S$ ; et
un électrolyte non aqueux ;
**caractérisée en ce que** le matériau actif négatif est du graphite naturel, la quantité de $Li_2S$ est de 0,6 6 à 0,8 partie en poids par rapport à 100 parties en poids du matériau actif positif et le rapport N/P est de 1,1.

2. Batterie au lithium rechargeable de la revendication 1, dans laquelle la particule de sulfure de lithium a un diamètre (X) satisfaisant l'Équation 1 suivante :

[Équation 1]

$$2r(\sqrt{2}-1) \leq X \leq 2r(\sqrt{2}-1) + 2r(\sqrt{2}-1) \times K$$

où, dans l'Équation 1 ci-dessus,
r est le rayon du matériau actif capable d'intercaler/désintercaler de manière réversible le lithium, et K est le rapport de réduction du volume lorsque le sulfure de lithium devient soufre.

3. Batterie au lithium rechargeable de l'une quelconque des revendications 1 et 2, dans laquelle l'électrolyte non aqueux comprend un solvant organique non aqueux et un sel de lithium.

4. Batterie au lithium rechargeable de la revendication 3, dans laquelle le solvant organique non aqueux est au moins un solvant choisi dans le groupe consistant en un solvant à base de carbonate, un solvant à base d'ester, un solvant à base d'éther, un solvant à base de cétone, un solvant à base d'alcool, et un solvant aprotique.

FIG. 1

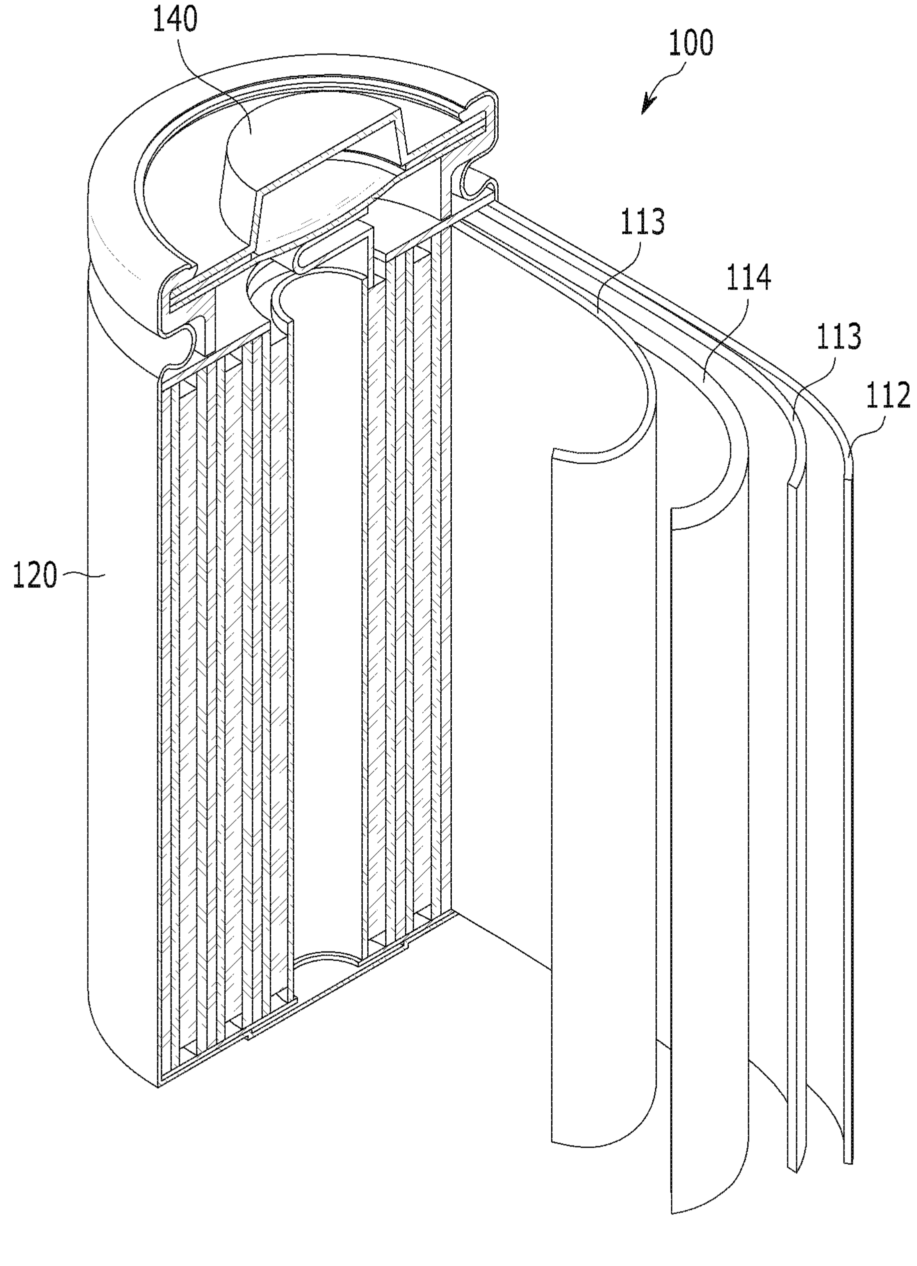

FIG. 2

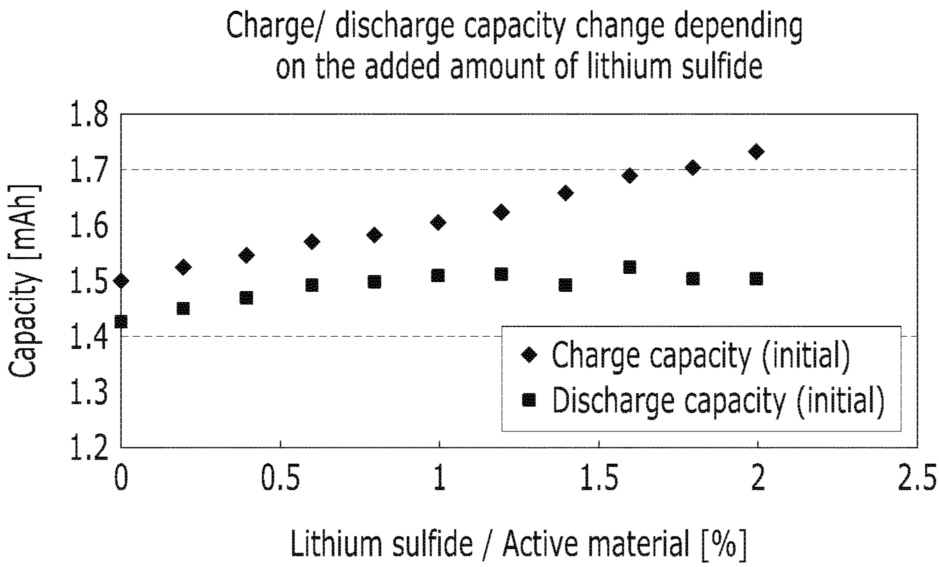
Charge/ discharge capacity change depending
on the added amount of lithium sulfide
Capacity [mAh]
1.8
1.7
1.6
1.5
1.4
1.3
1.2
0
0.5
1
1.5
2
2.5
Lithium sulfide / Active material [%]
Charge capacity (initial)
Discharge capacity (initial)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 20040073076
- US 2005042514 A
- JP 2006007336 A


### Non-patent literature cited in the description


- *J. Eloctrochem. Soc.,* April 1998, vol. 145 (4
- *Journal of Power Sources,* 2010, vol. 195, 6143-6147
- *Electrochemical and Solid-State Letters,* 2003, vol. 6 (90), A194-A197